# EUROPÄISCHE PATENTANMELDUNG

(11) **EP 0 982 601 A1**
(43) Veröffentlichungstag der Anmeldung: **01.03.2000**
(21) Anmeldenummer: 99111201.2
(22) Anmeldetag: 09.06.1999
(51) Int. Cl.: G01S 5/14

(54) **Verfahren und Datenempfänger zum Empfang von Korrekturdaten enthaltenden Funksignalen für ein Global Navigation Satellite System**

(30) Priorität: 14.08.1998 DE 19836966
(71) Anmelder: ROBERT BOSCH GMBH, 70442 Stuttgart (DE)
(72) Erfinder: Bochmann, Harald, 30419 Hannover (DE); Tanneberger, Volkmar, 31139 Hildesheim (DE)

(57) **Zusammenfassung**

Die vorliegende Erfindung betrifft einen Datenempfänger (100) zum Empfang von Korrekturdaten enthaltenden Funksignalen für ein Global Navigation SatelliteSystem (GNSS), insbesondere für ein Fahrzeug, Kraftfahrzeug, Luftfahrzeug oder Seefahrzeug. Hierbei ist eine Frequenztabelle (16) und eine Dekodiertabelle (26) für wenigstens zwei unterschiedliche Quellen der Funksignale vorgesehen.

## Beschreibung

### Technisches Gebiet

Die Erfindung betrifft einen Datenempfänger zum Empfang von Korrekturdaten enthaltenden Funksignalen für ein Global Navigation Satellite System (GNSS), insbesondere für ein Fahrzeug, Kraftfahrzeug, Luftfahrzeug oder Seefahrzeug, gemäß dem Oberbegriff des Anspruchs 1. Die Erfindung betrifft ferner ein Verfahren zur Navigation mittels eines Global Navigation Satellite Systems (GNSS), wobei Differential-GNSS-Daten (DGNSS-Daten) zur Korrektur der GNSS-Daten verwendet werden, gemäß dem Oberbegriff des Anspruchs 14.

### Stand der Technik

Durch das Militär in den USA bzw. der ehemaligen UDSSR wurde ein weltweit verfügbares Satelliten-Navigationssystem aufgebaut, das sogn. Global Positioning System (GPS) bzw. Global Navigation Satellite System (GLONASS). Die Systeme GPS und GLONASS sowie zukünftige Weiterentwicklungen dieser Satellitennavigation werden unter dem Oberbegriff Global Navigation Satellite System (GNSS) zusammengefasst. Die genauen Signale sind allerdings verschlüsselt, so dass nur der Betreiber selbst bei direkter Anwendung des Verfahrens eine Genauigkeit von etwa 3 m erzielt.

Für zivile Nutzer steht nur ein , unverschlüsseltes Signal mit sich ständig ändernden, künstlich verschlechterten Positionsdaten zur Verfügung. Für viele Anwender reicht die erzielbare Genauigkeit von typischerweise 100 m jedoch nicht aus. Daher wurde bereits ein Verfahren vorgeschlagen, mit dem ebenfalls die Genauigkeit von 3 m erzielbar ist. Hierzu ist ein weiterer GNSS-Empfänger an einem genau vermessenen Ort installiert und dient als Referenzstation. Die empfangenen GNSS- und die bekannten tatsächlichen Positionsdaten werden an der Referenzstation miteinander verglichen. Die Differenz wird als Korrekturdaten an mobile Stationen mittels eines die Korrekturdaten enthaltenden Funksignals übertragen. Alle im Empfangsbereich dieses Funksignals befindlichen GNSS-Empfänger können auf der Grundlage dieser Daten ihre mittels GNSS-Daten bestimmte Position entsprechend korrigieren.

Für die Referenzstation wird die aktuelle Position bestmöglich auf der Grundlage der zivilen GNSS-Signale bestimmt. Diese Positionsbestimmung wird unter Einsatz einer Trägerphasenmessung auf hohe Genauigkeit gebracht. Nach einer Kalibrierungsphase werden permanent Korrekturwerte ermittelt und an die mobilen Empfänger übertragen. Der mobile Empfänger empfängt selbständig GNSS-Signale und nutzt die eingegangenen Korrekturdaten, um seine Position zu ermitteln. Anschließend stellt er die Positionsdaten zur Weiterverarbeitung zur Verfügung. Sie können dann auf einem Bildschirm ausgegeben und/oder zur Fahrzeugnavigation verwendet werden. Dieses Verfahren nennt man Differential GNSS oder kurz DGNSS.

Mit der zunehmenden Verbreitung von Verkehrstelematik -und Navigationsgeräten in Kraftfahrzeugen gewinnt die Ortungs-Funktionalität immer mehr an Bedeutung. Verstärkt kommen hierbei Ortungsempfänger für das NAVASTAR Global Positioning System (GPS) bzw. das GNSS-System zum Einsatz, die durch Laufzeitmessungen zu mindestens vier GNSS-Satelliten eine dreidimensionale Positionsbestimmung erlauben. Im Sinne einer hohen Systemintegrität wird für diese Empfänger eine möglichst hohe Positionsgenauigkeit und Verfügbarkeit gefordert

Ein verbreitetes Verfahren zur Erhöhung der Genauigkeit der GNSS-Positionsdaten stellt das oben erläuterte Differential GNSS (DGNSS) dar, bei dem von einer stationären Referenzstation mit bekannter Position Korrekturwerte für die empfangenen Satelliten berechnet und in Echtzeit über eine Telemetrie-Verbindung an die mobilen Nutzer übermittelt werden. Durch Berücksichtigung dieser Korrekturwerte in der Navigationslösung der mobilen Empfänger können alle korrelierten Fehler (d.h. die im Überdeckungsbereich der Referenzstation konstanten Fehler) eliminiert und damit die Genauigkeit der GNSS-Position des mobilen Nutzers deutlich gesteigert werden.

Bisher wurde das DGNSS-Verfahren überwiegend für geodätische Zwecke eingesetzt, wobei die Referenzstation von dem Nutzer bzw. den Nutzergruppen lokal betrieben wurde. Ein europaweit flächendeckender DGNSS-Service, der für eine Anwendung des DGNSS-Verfahrens in Massenanwendung erforderlich wäre, ist bisher nicht verfügbar.

Aufgrund der erwarteten Massenanwendungen im land-, luft- und wassergebundenen Individualverkehr werden jedoch in naher Zukunft unterschiedliche DGNSS-Diensteanbieter Korrekturdaten über verschiedene Übertragungskanäle anbieten. Erste Untersuchungen haben gezeigt, dass die einzelnen DGNSS-Dienste aufgrund der unterschiedlichen Übertragungsverfahren (Frequenz, Phasen bzw. Amplitudenmodulation) und aufgrund der unterschiedlichen Übertragungsfrequenzen (Lang-, Mittel-, bzw. Ultrakurzwelle) sowohl eine unterschiedliche Güte als auch eine unterschiedliche Verfügbarkeit der DGNSS-Korrekturdaten erwarten lassen.

Hierbei ist es jedoch von Nachteil, dass auf GNSS basierende Navigationsgeräte hersteilerspezifisch lediglich nur eine Quelle für DGNSS-Daten enthaltende Funksignale bzw. nur einen DGNSS-Dienst bzw. nur eine Referenzstation nutzen. Da diese Dienste jedoch nicht flächendeckend sondern lediglich lokal ausstrahlen, steht eine mittels DGNSS verfeinerte GNSS-Navigation nur in einem vorbestimmt begrenzten, lokalen Bereich zur Verfügung.

### Darstellung der Erfindung, Aufgabe, Lösung, Vorteile

Es ist Aufgabe der vorliegenden Erfindung, einen verbesserten Datenempfänger der oben genannten Art sowie ein verbessertes Verfahren der o.g. Art zur Verfügung zu stellen, wobei die oben genannten Nachteile beseitigt werden und eine wenigstens europaweit flächendeckende Verfügbarkeit von DGNSS-Daten zur GNSS-Navigation mit erhöhter Genauigkeit zur Verfügung steht.

Diese Aufgabe wird durch einen Datenempfänger der o.g. Art mit den in Anspruch 1 gekennzeichneten Merkmalen und durch ein Verfahren mit den in Anspruch 14 angegebenen Merkmalen gelöst.

Dazu ist es bei einem Datenempfänger der o.g. Art erfindungsgemäß vorgesehen, dass eine Frequenztabelle und eine Dekodiertabelle für wenigstens zwei unterschiedliche Quellen der Funksignale vorgesehen ist.

Dies hat den Vorteil, dass eine anbieterunabhängige Versorgung mit Korrekturdaten aus unterschiedlichsten Quellen flächendeckend für eine GNSS-Navigation mit erhöhter Genauigkeit zur Verfügung steht.

Vorzugsweise Weitergestaltungen des Datenempfängers sind in den Ansprüchen 2 bis 13 beschrieben.

Für einen schnellen und verzögerungsfreien Zugriff auf die Daten in der Frequenztabelle und der Dekodiertabelle sind diese in vorteilhafter Weise in einem Speicher im Datenempfänger abgespeichert.

Zur Weiterverarbeitung der empfangenen Korrekturdaten ist ein Datenausgang für Korrekturdaten zum Anschluss an ein GNSS-Navigationsgerät vorgesehen, wobei der Datenempfänger ggf. in das GNSS-Navigationsgerät integriert ist.

Für eine große Frequenzabdeckung, so dass möglichst viele verschiedene Korrekturdaten enthaltende Funksignale ggf. gleichzeitig ausgewertet werden können, ist wenigstens ein Funkempfänger für wenigstens ein Frequenzband, insbesondere zwei Funkempfänger für drei verschiedene Frequenzbänder, vorgesehen.

Eine einheitliche Signalverarbeitung erzielt man dadurch, dass dem Funkempfänger wenigstens ein Demodulator zur Umsetzung des empfangenen Funksignals in ein Basisband nachgeschaltet ist.

Zum Dekodieren von Korrekturdaten unterschiedlichster Anbieter, d.h. aus unterschiedlichsten Funksignalen, ist dem Demodulator wenigstens eine Dekodiervorrichtung zum Dekodieren von Korrekturdaten aus dem Funksignal nachgeschaltet, wobei die Dekodiervorrichtung mit der Dekodiertabelle verbunden ist. Zweckmäßigerweise umfasst die Dekodiervorrichtung einen AM-/FM-/PM-Decoder und einen Data-Switch.

Für eine jederzeit optimale Versorgung mit Korrekturdaten ist in besonders vorteilhafter Weise eine zentrale Steuereinheit vorgesehen, welche eine Auswahl der Quellen und der entsprechenden Funksignale steuert. Diese zentrale Steuereinheit umfasst zweckmäßigerweise einen Eingang zum Empfang von GNSS-Positionsdaten aus einem GNSS-Navigationsgerät.

Zur zusätzlichen Auswertung von weiteren Daten ist ein Interface zum Empfang von zusätzlichen, in anderen Funksignalen enthaltenden Zusatzdaten vorgesehen. Dabei ist in vorteilhafter Weise das Interface mit einem Autoradio, einem Funktelefon und/oder einem Satellitenfunktelefon verbunden und die Zusatzdaten umfassen beispielsweise DAB-Daten (Digital Audio Broadcasting), GSM- (Global System for Mobile Communications) bzw. SMS-Daten (Short Message Service) und/oder Daten der INMARSAT.

Zweckmäßigerweise umfassen die Korrekturdaten RDS/RASANT-Daten (radiounterstützte Satellitennavigationstechnik), AMDS-Daten (Amplituden Moduliertes Daten System), SWIFT-Daten, DARC-Daten (Verfahren in Japan zur Datenübertragung mittels FM-Subcarrier, vergleichbar Radio Data System (RDS)), LORAN C-Daten (LOng RAnge Navigation, Hyperbel-Navigations-System bei 100 kHz) und/oder ALF-Daten (Accurate positioning by Low Frequency).

Zur Lösung der obigen Aufgabe ist es bei einem Verfahren der o.g. Art erfindungsgemäß vorgesehen, dass aus einer Liste mehrerer, vorbekannter Funksignale, welche DGNSS-Daten enthalten, wenigstens ein Funksignal ausgewählt und dekodiert wird.

Dies hat den Vorteil, dass eine anbieterunabhängige Versorgung mit Korrekturdaten aus unterschiedlichsten Quellen flächendeckend für eine GNSS-Navigation mit erhöhter Genauigkeit zur Verfügung steht.

Vorzugsweise Weitergestaltungen der Vorrichtung sind in den Ansprüchen 14 bis 17 beschrieben.

Zweckmäßigerweise erfolgt die Auswahl in Abhängigkeit von einem momentanen Standort, von einer Entfernung von einer Quelle des jeweiligen Funksignals, von einer einem Funksignal-Anbieter zu entrichtenden Nutzungsgebühr und/oder von einer Signalqualität des jeweiligen Funksignals.

Zur weiteren Verarbeitung und Verwendung werden in vorteilhafter Weise die dekodierten DGNSS-Daten an ein GNSS-Navigationsgerät übertragen.

Eine vorteilhafte Erweiterung zur Verfügung stehender Daten erzielt man dadurch, dass Zusatzdaten empfangen werden, welche insbesondere DAB-Daten (Digital Audio Broadcasting), GSM- (Global System for Mobile Communications) bzw. SMS-Daten (Short Message Service) und/oder Daten der INMARSAT umfassen.

### Kurze Beschreibung der Zeichnungen

Nachstehend wird die Erfindung anhand der beigefügten Zeichnung näher erläutert. Diese zeigt in der einzigen Figur eine bevorzugte Ausführungsform eines erfindungsgemäßen Datenempfängers.

### Bester Weg zur Ausführung der Erfindung

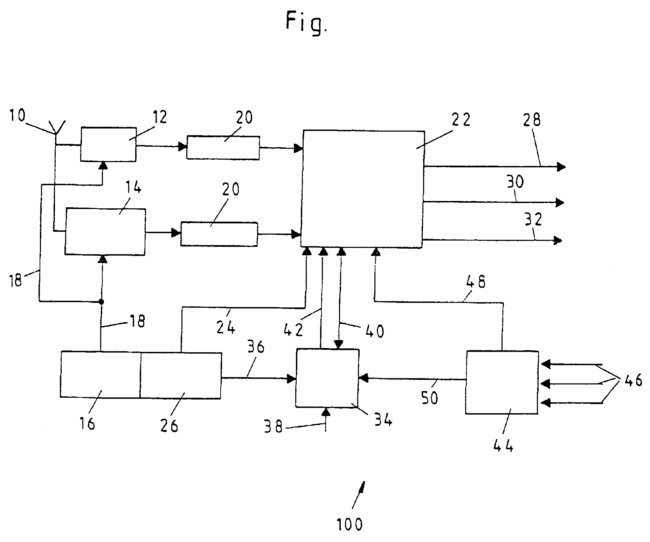

Die in Figur 1 dargestellte bevorzugte Ausführungsform eines erfindungsgemäßen Datenempfängers 100 umfasst eine Empfangsantenne 10 mit an diese angeschlossenen Funkemprfängern, wie beispielsweise einen UKW-Funkempfänger 12 und einen MW- und LW-Funkempfänger 14. Eine Frequenztabelle 16 enthält Sendefrequenzen von vorbekannten Quellen für Korrekturdaten für GNSS-Positionsdaten (Global Navigation Satellite System), beispielsweise von sogn. Referenzstationen, welche die aktuell aus dem GNSS erhältlichen GNSS-Positionsdaten mit einer vorbestimmten Position vergleichen und entsprechende Korrekturdaten berechnen und über ein Funksignal an andere GNSS-Navigationsgeräte weitergeben. Die Frequenztabelle 16 gibt über eine Verbindung 18 bei Bedarf jeweilige Frequenzen an die Funkempfänger 12 und 14 weiter, weiche die jeweilige Frequenz als Empfangsfrequenz einstellen.

Das aus den Funkempfängern 12 und 14 kommende Empfangssignal wird in jeweiligen Demodulatoren 20 auf ein Basisband umgesetzt und an eine Dekodiervorrichtung 22 weitergegeben. Diese Dekodiervorrichtung 22 ist beispielsweise zur Dekodierung von RDS/RASANT-Daten (radiounterstützte Satellitennavigationstechnik), AMDS-Daten (Amplituden Moduliedes Daten System), SWIFT-Daten, DARC-Daten und/oder ALF-Daten (Accurate positioning by Low Frequency) ausgelegt und erhält entsprechende Dekodierparameter und ggf. Dekodierschlüssel über eine Verbindung 24 von einer Dekodiertabelle 26. Die Dekodiervorrichtung 22 umfasst ferner in vorteilhafter Weise einen AM-/FM-/PM-Decoder, so dass unterschiedlichste Signale mit unterschiedlichsten Modulationsverfahren dekodiert werden können.

Ein Data-Switch in der Dekodiervorrichtung 22 befördert dekodierte Informationen auf entsprechende Ausgänge 28, 30, 32. So werden beispielsweise dekodierte DGNSS-Korrekturdaten (Differential GNSS) nach einem Standard gemäß RTCM (Radio Technical Commission for Maritime Services) auf einen ersten Ausgang 28, sogn. TMC-Daten (Traffic Message Channel) auf einen zweiten Ausgang 30 und sogn. LORAN-C-Daten (Rohdaten) auf einen dritten Ausgang 32 gegeben. Diese Ausgänge 28, 30 und 32 sind beispielsweise mit einem nicht dargestellten GNSS-Navigationsgerät verbunden, welches diese Daten in entsprechender Weise weiter verarbeitet bzw. zur Genauigkeitserhöhung der GNSS-Navigation verwendet.

Eine zentrale Steuervorrichtung 34 steuert eine Dienste- bzw. Senderauswahl und erhält Daten aus der Dekodiertabelle 26 über eine Verbindung 36, GNSS-Positionsdaten aus dem nicht dargestellten GNSS-Navigationsempfänger über eine Verbindung 38 und eine Qualitätsbewertung jeweiliger zu dekodierende Daten enthaltender Funksignale über eine Verbindung 40 von der Dekodiervorrichtung 22. Anhand dieser Daten Steuert die Steuervorrichtung 23 die Dekodiervorrichtung 22 über eine Verbindung 42 an.

Ein optional zusätzliches Interface 44 erlaubt ferner einen Empfang von externen, zusätzlichen Daten über die Eingänge 46, wobei es sich bei diesen zusätzlichen Daten beispielsweise um DAB-Daten (Digital Audio Broadcasting), GSM- (Global System for Mobile Communications) bzw. SMS-Daten (Short Message Service) und/oder Daten der INMARSAT handelt (INMARSAT ist ein Unternehmen, welches ein weltweites, satellitengestütztes Datenübertragungsnetz zur Nutzung anbietet). Dies Daten werden beispielsweise von einem an den Eingängen 46 angeschlossenen Autoradio, Funktelefon oder Satellitenfunktelefon übermittelt. Über eine Verbindung 48 gibt das Interface diese Daten an die Dekodiervorrichtung 22 weiter. Über eine Verbindung 50 gibt das Interface 44 Informationen bezüglich einer Qualitätsbewertung der zusätzlichen Daten an die Steuervorrichtung 34 weiter, weiche dann auch auf diesen Informationen basierend eine entsprechende Auswahl der Dienste- bzw. Senderauswahl und die Dekodiervorrichtung 22 steuert.

Erfindungsgemäß wird eine Verknüpfung verschiedenartiger Datenempfänger zu einem neuen Gerät mit verbessertem Empfang von DGNSS-Korrekturdaten und von Zusatzinformationen z.B. TMC-Daten oder LORAN C Navigationsdaten, vorgeschlagen. Dabei wird von dem erfindungsgemäßen Datenempfänger 100 aufgrund einer Bewertung der Signalqualität der verfügbaren DGNSS-Daten ein DGNSS-Dienst bzw. mehrere DGNSS-Dienste ausgewählt und dekodiert. neben der Qualitätsbewertund der Datenübertragung können auch andere Entscheidungskriterien, wie z.B. 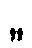 unterschiedliche Nutzergebühren" oder 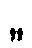 Entfernung von der Referenzstation" herangezogen werden. Das neuartige Datenempfänger-Konzept ermöglicht, durch die Nutzung unterschiedlicher DGNSS-Dienste sowohl eine bestmögliche, nahezu europaweite Bedeckung mit Korrekturdaten als auch eine qualitätsbezogene Auswahl bei Empfang mehrerer DGNSS-Dienste.

Das grundsätzliche Konzept des Datenempfängers 100 ist der Empfang von DGNSS-Korrekturdaten und Zusatzinformation mit erhöhter Verfügbarkeit. Über den UKW-Empfängerzweig bestehend aus UKW-Frontend 12 und Demodulator 20, werden alle in diesem Frequenzband verfügbaren Datendienst ins Basisband umgesetzt und demoduliert. Fontend 12 und Demodulator 20 sind in der Gestalt ausgeführt, dass eine anschließende Decodierung derzeit bekannter UKW-Datenübertragungsverfahren, z.B. RDS, SWIFT oder DARC, möglich ist. In gleicher Weise werden über ein Mittel- und Langwellen-Empängerzweig, bestehend aus MW-LW-Frontend 14 und Demodulator 20 die in diesem Frequenzband verfügbaren Datendienste ins Basisband umgesetzt. Der parametrierbare Decoder 22 extrahiert anschließend aus den jeweiligen Basisbandsignalen die aufgeprägten Nutzdaten und nimmt gegebenenfalls eine Entschlüsselung vor. Der Decoder 22 kann die Modulations- bzw. Übertragungsverfahren einiger bzw. aller derzeit im LW-, MW-und UKW-Bereich verfügbaren DGNSS-Datendienste dekodieren. Dies sind im UKW-Band die Dienste RDS/RASANT, SWIFT und DARC, im MW-/ LW-Band der Dienst AMDS-DGNSS und im LW-Band die Dienste ALF und LORAN C / EUROFiX (Kunstwort, durch TU Delft entwickeltes Verfahren zur Datenübertragung mittels LORAN-C). Zukünftig entstehende Dienste zur Übertragung von DGNSS-Korrekturdaten können durch geeignete Parameter-Implementierung in die Dekodier- und Frequenztabelle 16, 26 in das Gerät 100 integriert werden.

Die Steuerung 34 bewertet über geeignet ausgeprägte Algorithmen die Signal- und Daten-Qualität oder etwa auch die anfallenden Nutzergebühren der momentan verfügbaren DGNSS-Korrekturdatendienste und wählt einen oder mehrere Dienste zum Empfang aus. In der Steuerung 34 wird eine Liste der aktuell empfangbaren Dienste gepflegt, so dass bei Störung bzw. Abschattung eines momentan empfangenen Dienstes sofort auf einen anderen verfügbaren DGNSS-Dienst umgeschaltet werden kann und somit eine befriedigende Verfügbarkeit der DGNSS-Korrekturdaten gewährleistet ist.

In der Dkodiertabelle 26 sind die für die Dekodierung und ggf. erforderliche Entschlüsselung der grundsätzlich verfügbaren DGNSS-Korrekturdatendienste benötigten Paramenter abgespeichert. Die Frequenztabelle 16 enthält die in den betrachteten Frequenzbändern verfügbaren Frequenzen der DGNSS-Dienste. Beispielsweis ist eine dynamische Erweiterung der Frequenztabelle vorgesehen, um während der Betriebsdauer des Datenempfängers 100 neu hinzugekommene Frequenzen, die geziehlt oder zufällig detektiert werden , zu ergänzen.

An seinem Ausgang 28, 30, 32 liefert der Datenempfänger 100 DGNSS-Korrekturdaten zur Weiterverarbeitung an einen nachfolgenden GNSS-Satellitennavigations-Empfänger. Zusätzliche Nutzdaten, die den verschiedenen DGNSS-Korrekturdatendiensten aufgeprägt sein können, werden ebenfalls ausgegeben, z.B. über die serielle Schnittstelle 44. Bei diesen zusätzlichen Daten kann es sich z.B. um Daten des Traffic Message Channel (bei RDS/RASANT) oder um LORAN C Navigationsdaten (bei LORAN C / EUROFIX) handeln, die übergeordneten Applikationen zur Verfügung gestellt werden können.

In einer alternativen Ausführung ist die Einbeziehung weiterer Datendienst in anderen als den bisher erwähnten Frequenz-Bändern denkbar, z.B. Digital Audio Broadcasting (DAB), Satellitenfunk (INMARASAT oder ) oder Mobilfunk (GSM) und hier besonders der Short Message Service (SMS). In diesem Fall wird aus den jeweiligen Eingangssignalen über entsprechend ausgeführte interfaces eine für die in der Steuerung durchgeführte Qualitätsbewertung geeignete Information generiert. Werden die DGNSS-Korrekturdaten eines dieser externen Empfänger ausgewählt, so übernimmt der Decoder / Data Switch 22 die Durchschaltung auf die Ausgabe-Schnittstelle des Datenempfängers 100. Unter Verwendung zukünftiger Technologien ist auch eine Integration dieser Empfänger als zusätzliche Empfängerzweige in den hier beschriebenen Datenempfänger 100 möglich.

Außerdem ist in einer weiteren alternativen Ausführungsform die Doppelung bzw. mehrfache Ausführung des UKW- bzw. MW-/LW-Empfängerzweiges 12, 14 vorgesehen. Dadurch ist eine Antenna-Diversity oder auch der Betrieb eines Hintergrund-Empfängers möglich. Bei Verwendung eines Hintergrund-Empfängers kann bei ununterbrochenem Empfang der DGNSS-Korrekturdaten auf dem Vordergrundempfänger im Hintergrund nach weiteren empfangbaren DGNSS-Diensten gesucht werden, so dass eine sehr aktuelle Liste der aktuell verfügbaren DGNSS-Dienste in der Steuerung 34 vorliegt.

Weiterhin ist denkbar, dass der nachgeschaltete GNSS-Empfänger, an den die DGNSS-Korrektordaten geliefert werden, seine aktuelle Positionsberechnung an den Datenempfänger zurück liefert (Verbindung 38), so dass bei der Auswahl des/der geeigneten DGNSS-Korrekturdatendienste geographische Kriterien berücksichtigt werden können. In diesem Fall ist zusätzlich neben der Senderfrequenz auch die geographische Position der grundsätzlich verfügbaren Sende- bzw. Referenzstationen in einer Tabelle im Datenempfänger 100 gespeichert.

Der hier beschriebene Datenempfänger 100 zum Empfang von DGNSS-Korrekturdaten und Zusatzinformation mit erhöhter Verfügbarkeit kann alle oder auch nur einige wesentliche der aufgeführten Merkmale enthalten. Eine hochintegrierte Ausführung unter Verwendung moderner Technologien und Verfahren der digitalen Sinalverarbeitung ist denkbar.

## Patentansprüche

1. Datenempfänger (100) zum Empfang von Korrekturdaten enthaltenden Funksignalen für ein Global Navigation Satellite System (GNSS), insbesondere für ein Fahrzeug, Kraftfahrzeug, Luftfahrzeug oder Seefahrzeug,
dadurch gekennzeichnet, dass
eine Frequenztabelle (16) und eine Dekodiertabelle (26) für wenigstens zwei unterschiedliche Quellen der Funksignale vorgesehen sind.

2. Datenempfänger (100) nach Anspruch 1,
dadurch gekennzeichnet, dass
in dem Datenempfänger (100) ein Speicher zum Speichern der Frequenztabelle (16) und/oder der Dekodiertabelle (26) vorgesehen ist.

3. Datenempfänger (100) nach Anspruch 1 oder 2,
dadurch gekennzeichnet, dass
ein Datenausgang (28,30,32) für korrekturdaten zum Anschluss an ein GNSS-Navigationsgerät vorgesehen ist.

4. Datenempfänger (100) nach einem der vorhergehenden Ansprüche,
dadurch gekennzeichnet, dass
dieser in ein GNSS-Navigationsgerät integriert ist.

5. Datenempfänger (100) nach einem der vorhergehenden Ansprüche,
dadurch gekennzeichnet, dass
wenigstens ein Funkempfänger (12,14) für wenigstens ein Frequenzband, insbesondere zwei Funkempfänger für drei verschiedene Frequenzbänder, vorgesehen ist.

6. Datenempfänger (100) nach einem der vorhergehenden Ansprüche,
dadurch gekennzeichnet, dass
dem Funkempfänger (12,14) wenigstens ein Demodulator (20) zur Umsetzung des empfangenen Funksignals in ein Basisband nachgeschaltet ist.

7. Datenempfänger (100) nach Anspruch 6,
dadurch gekennzeichnet, dass
dem Demodulator (20) wenigstens eine Dekodiervorrichtung (22) zum Dekodieren von Korrekturdaten aus dem Funksignal nachgeschaltet ist, wobei die Dekodiervorrichtung (22) mit der Dekodiertabelle (26) verbunden ist.

8. Datenempfänger (100) nach Anspruch 7,
dadurch gekennzeichnet, dass
die Dekodiervorrichtung (22) einen AM-/FM-/PM-Decoder und einen Data-Switch umfasst.

9. Datenempfänger (100) nach einem der vorhergehenden Ansprüche,
dadurch gekennzeichnet, dass
eine zentrale Steuereinheit (34) vorgesehen ist, welche eine Auswahl der Quellen und der entsprechenden Funksignale steuert.

10. Datenempfänger (100) nach Anspruch 9,
dadurch gekennzeichnet, dass
die zentrale Steuereinheit (34) einen Eingang (38) zum Empfang von GNSS-Positionsdaten aus einem GNSS-Navigationsgerät aufweist.

11. Datenempfänger (100) nach einem der vorhergehenden Ansprüche,
dadurch gekennzeichnet, dass
ein Interface (44) zum Empfang von zusätzlichen, in anderen Funksignalen enthaltenden Zusatzdaten vorgesehen ist.

12. Datenempfänger (100) nach Anspruch 11,
dadurch gekennzeichnet, dass
das Interface (44) mit einem Autoradio, einem Funktelefon und/oder einem Satellitenfunktelefon verbunden ist und die Zusatzdaten DAR-Daten (Digital Audio Broadcasting), GSM- (Global System for Mobile Communications) bzw. SMS-Daten (Short Message Service) und/oder Daten der INMARSAT umfassen.

13. Datenempfänger (100) nach einem der vorhergehenden Ansprüche,
dadurch gekennzeichnet, dass
die Korrekturdaten RDS/RASANT-Daten (radiounterstützte Satellitennavigationstechnik), AMDS-Daten (Amplituden Moduliertes Daten System), SWIFT-Daten, DARC-Daten LORAN C-Daten und/oder ALF-Daten (Accurate positioning by Low Frequency) umfassen.

14. Verfahren zur Navigation mittels eines Global Navigation Satellite Systems (GNSS), wobei Differential-GNSS-Daten (DGNSS-Daten) zur Korrektur der GNSS-Daten verwendet werden,
dadurch gekennzeichnet, dass
aus einer Liste mehrerer, vorbekannter Funksignale, welche DGNSS-Daten enthalten, wenigstens ein Funksignal ausgewählt und dekodiert wird.

15. Verfahren nach Anspruch 14,
dadurch gekennzeichnet, dass
die Auswahl in Abhängigkeit von einem momentanen Standort, von einer Entfernung von einer Quelle des jeweiligen Funksignals, von einer einem Funksignal-Anbieter zu entrichtenden Nutzungsgebühr und/oder von einer Signalqualität des jeweiligen Funksignals durchgeführt wird.

16. Verfahren nach Anspruch 14 oder 15,
dadurch gekennzeichnet, dass
die dekodierten DGNSS-Daten an ein GNSS-Navigationsgerät übertragen werden.

17. Verfahren nach einem der Ansprüche 14 bis 16,
dadurch gekennzeichnet, dass
Zusatzdaten empfangen werden, welche insbesondere DAB-Daten (Digital Audio Broadcasting), GSM- (Global System for Mobile Communications) bzw. SMS-Daten (Short Message Service) und/oder Daten der INMARSAT umfassen.
